# EUROPÄISCHE PATENTSCHRIFT

(11) **EP 2 735 929 B1**
(45) Veröffentlichungstag und Bekanntmachung des Hinweises auf die Patenterteilung: **17.06.2020**
(21) Anmeldenummer: 13005370.5
(22) Anmeldetag: 14.11.2013
(51) Int. Cl.: G05B 19/409

(54) **Bedieneinheit für eine Spritzgießmaschine**
Control panel for an injection moulding machine
Unité d'affichage et de commande pour une machine de moulage à injection

(30) Priorität: 26.11.2012 AT 12412012
(43) Veröffentlichungstag der Anmeldung: 28.05.2014
(73) Patentinhaber: ENGEL AUSTRIA GmbH, 4311 Schwertberg (AT)
(72) Erfinder: Hölzl, Rainer, 4284 Tragwein (AT); Kern, Albin, 4311 Schwertberg (AT); Voggeneder, Johann, 4310 Mauthausen (AT); Wahlmüller, Markus, 4332 Au/Donau (AT)
(74) Vertreter: Torggler & Hofinger Patentanwälte

(56) Entgegenhaltungen:
- EP-A1- 0 216 939
- DE-A1-102005 046 686

## Beschreibung

Die vorliegende Erfindung betrifft eine Bedieneinheit für eine Spritzgießmaschine mit den Merkmalen des Oberbegriffs des Anspruch 1 sowie eine Spritzgießmaschine mit einer derartigen Bedieneinheit.

Bedieneinheiten von Spritzgießmaschinen umfassen gewöhnlich einen Bildschirm sowie eine oder mehrere Handtasten. Diese Handtasten dienen zur Bedienung von Elementen der Spritzgießmaschine inklusive Automatisierungselementen und lösen direkt Bewegungen oder andere Aktionen der Spritzgießmaschinenelemente aus, falls die Bewegung im vorherrschenden Betriebszustand möglich ist. Beispiele für so zu steuernde Spritzgießmaschinenelemente sind etwa die Einspritzeinheit, Eilgangvorrichtungen, Druckaufbauvorrichtungen und Verriegelungsmechanismen. Der Bildschirm dient unter anderem der Darstellung vieler einzustellender Parameter, wie etwa maximale Schließkraft, Dosiervolumen oder ein Öffnungsweg. Eine gattungsgemäße Bedieneinheit geht beispielsweise aus der AT 509 779 A1 der Anmelderin hervor.

Nun kann es vorkommen, dass gewisse Bewegungen oder Aktionen nicht durchgeführt werden können, weil die Vorraussetzungen hierfür nicht gegeben sind. Ein einfaches Beispiel wäre, wenn versucht würde den Einspritzvorgang zu beginnen, ohne dass der Schließdruck aufgebaut wäre. Wegen der hohen Komplexität moderner Spritzgießmaschinen kann es schwer ersichtlich sein, wodurch eine gewisse Bewegung verhindert wird. Der Bediener muss dann entweder im Bedienprogramm zu den betreffenden Untersystemen navigieren und diese überprüfen, oder eine Liste von Alarmmeldungen abarbeiten.

Die EP 0 216 939 A1 beschreibt ein Display einer Spritzgießmaschine zur Anzeige der Dosier- und Knetbewegungen der Plastifizierschnecke.

Die DE 10 2005 046686 A1 beschreibt eine Steuerung für Druckmaschinen, welche in diesem Bereich ähnliche Probleme lösen soll. Dabei ist die Steuerung so konfiguriert, dass beim Aufrufen einer Funktion, welche im Moment nicht zur Verfügung steht, lediglich die Voraussetzungen für die Funktion angezeigt werden, welche noch nicht erfüllt sind. Sind alle Voraussetzungen zum Ausführen der Funktion erfüllt, so wird die gewünschte Funktion ausgeführt.

Die Anforderungen an Druckmaschinen und Spritzgießmaschinen sind unterschiedlich. Sowohl maschinenbaulich als auf im Hinblick auf deren Bedienung. Die Qualität und der Spritzgießprodukte ist von mehreren Faktoren abhängig, wobei schon geringe Abweichungen dieser Faktoren einen Einfluss auf die Qualität der Produkte haben. Dadurch ist der Steuerungsprozess sensibler und komplexer als dies bei Druckmaschinen der Fall ist. Um einen reibungslosen Ablauf zu garantieren und den Bediener gleichzeitig auf dem neuesten Stand bezüglich der Maschineneigenschaften zu halten sind zusätzliche Informationen nötig.

Die Aufgabe der Erfindung besteht darin, eine Bedieneinheit für eine Spritzgießmaschine bereitzustellen, die dem Bediener bei Betätigung einer Handtaste das Suchen nach entsprechenden Informationen bzw. Warnungen erspart. Des Weiteren soll eine Spritzgießmaschine mit einer derartigen Bedieneinheit bereitgestellt werden.

Diese Aufgabe wird durch eine Bedieneinheit mit den Merkmalen des Anspruchs 1 sowie mit einer Spritzgießmaschine mit den Merkmalen des Anspruchs 4 gelöst.

Dies geschieht indem zu Spritzgießelementen gehörige, in der Spritzgießmaschine vorliegende Statusinformationen bezüglich einer Aktivierbarkeit oder einer Nicht-Aktivierbarkeit des zugehörigen Spritzgießmaschinenelements von der Datenverarbeitungseinrichtung abrufbar sind, und dass bei Betätigung der wenigstens einen Handtaste, falls die zum entsprechenden Spritzgießmaschinenelement zugehörige Statusinformation Aktivierbarkeit anzeigt, wenigstens ein Bediensignal an das Spritzgießmaschinenelement versendbar ist sowie die zugehörigen Informationen auf dem Bildschirm darstellbar sind und, falls die zum entsprechenden Spritzgießmaschinenelement zugehörige Statusinformation Nicht- Aktivierbarkeit anzeigt, die zugehörigen Informationen und ein auf die Nicht-Aktivierbarkeit hinweisender Warnhinweis auf dem Bildschirm darstellbar sind. Wenn die gewünschte Bewegung also durchführbar ist, stehen dem Bediener sofort alle benötigten Informationen bereit. Falls die Bewegung nicht möglich ist, wird der Bediener zu der Ursache hingeführt, ohne dass er nach dieser suchen müsste.

Es ist möglich, dass die zugehörigen Informationen nur während des Zeitraums der Betätigung der Handtaste dargestellt werden oder, dass die Informationen für einen Zeitraum nach der Betätigung dargestellt bleiben.

Weitere vorteilhafte Ausführungsformen der Erfindung sind in den abhängigen Ansprüchen definiert.

Bei Spritzgießmaschinen mit einer Bedieneinheit, die über einen berührungsempfindlichen Bildschirm verfügt, können die Handtasten nicht nur als physische Tasten sondern auch als berührungsempfindliche Bereiche auf dem Bildschirm ausgebildet sein.

Um die Bedienung so intuitiv wie möglich zu gestalten kann es vorgesehen sein, dass die Informationen und/oder der Warnhinweis in einem an die Handtasten unmittelbar angrenzenden Darstellungsbereich darstellbar sind, wobei der Darstellungsbereich vorzugsweise oberhalb der wenigstens einen Handtaste anordenbar ist.

Als Informationen können unter anderem auch verschiedene Parameter dargestellt werden, welche als Zahl und/oder in Balkendarstellung und/oder als Diagramm darstellbar sind. Für jeden Parameter kann also die passendste Visualisierung individuell gewählt werden.

Schutz begehrt wird auch für eine Spritzgießmaschine mit einer erfindungsgemäßen Bedieneinheit.

Weitere Vorteile und Einzelheiten ergeben sich anhand der Figuren sowie der dazugehörigen Figurenbeschreibung. Dabei zeigen
- Fig. 1a: eine mögliche Ausgestaltung der Informationsanzeige mit physischen Handtasten,
- Fig. 1b: eine ähnliche Ausgestaltung mit im Touchscreen integrierten Handtasten,
- Fig. 2 bis 5: verschiedene Beispiele der dargestellten Informationen und gegebenenfalls Warnhinweise und
- Fig. 6: eine Spritzgießmaschine mit einer erfindungsgemäßen Bedieneinheit.

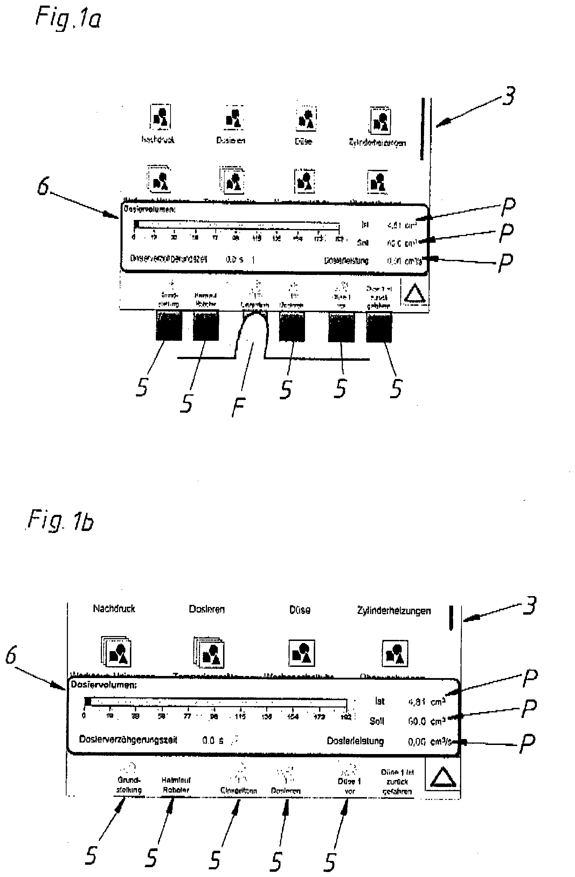

Fig. 1a zeigt eine erste Ausgestaltungsmöglichkeit der Informationsdarstellung auf dem Bildschirm 3. Wie zu erkennen ist, wird durch die Betätigung einer Handtaste 5 durch den Finger F eines Bedieners ein Darstellungsbereich 6 eingeblendet. In diesem werden verschiedene Parameter P in Balkendarstellung sowie als Zahlen dargestellt. Da in diesem Beispiel die Handtaste für das Einspritzen betätigt wird, werden z.B. das gegenwärtige Dosiervolumen sowie ein Soll-Dosiervolumen dargestellt.

In den folgenden Figuren wird der Finger F des Bedieners, also die Betätigung der Handtaste, nicht mehr explizit dargestellt, ist aber natürlich Vorraussetzung für die in den Figuren dargestellten Informationen bzw. Warnhinweise.

Fig. 1b zeigt eine der Fig. 1a ähnliche Ausführungsform, wobei hier die Handtasten 5 als berührungsempfindliche Bereiche auf dem Bildschirm 3 ausgebildet sind.

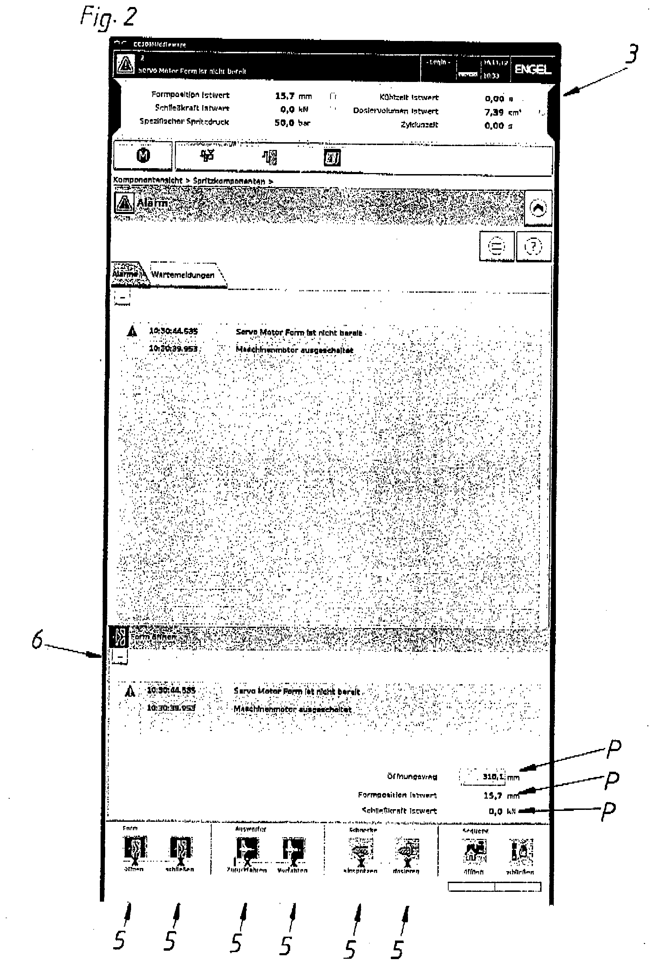

In den Fig. 2 bis 5 ist eine alternative Darstellungsform der Informationen abgebildet, wobei diese für verschiedene zu Spritzgießelementen zugehörige Handtasten dargestellt ist.

Fig. 2 betrifft das Öffnen der Form, wobei hier die Bewegung nicht möglich ist, da der betreffende Servomotor nicht bereit ist bzw. der Maschinenmotor ausgeschaltet ist. Als Parameter werden ein Öffnungsweg, eine momentane Position der Form sowie eine Schließkraft dargestellt.

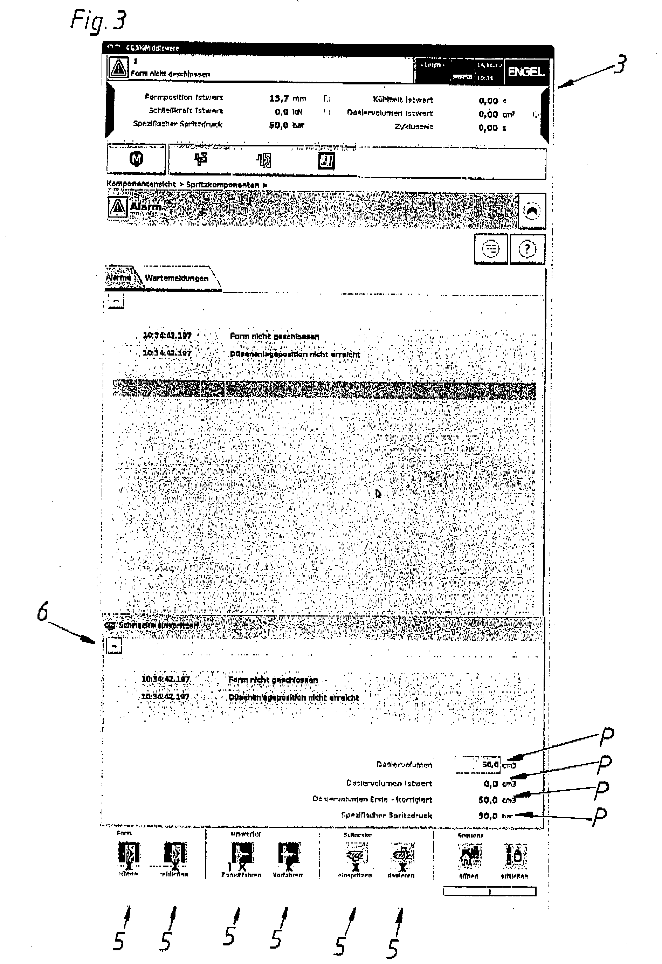

Fig. 3 betrifft das Einspritzen durch die Schnecke. Auch hier ist die Bewegung nicht möglich, da die Form nicht geschlossen ist und die Düsenanlagenposition nicht erreicht ist. Auch hier werden vorgegebene, aktuelle und korrigierte Dosiervolumina bzw. ein Einspritzdruck dargestellt.

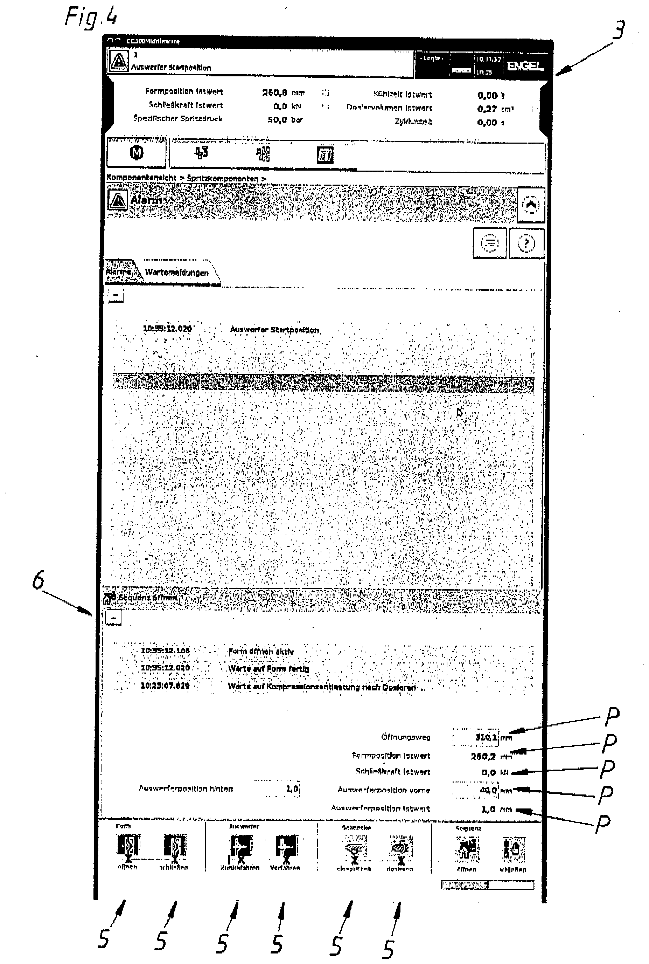

Fig. 4 betrifft eine Handtaste, die eine Bewegungssequenz, in diesem Fall zur Formöffnung, auslöst. Die Bewegung ist in diesem Fall möglich, wobei dem Bediener angezeigt wird, welche Bewegungen noch fertig durchzuführen sind, um die Sequenz abschließen zu können. Auch hier werden wieder einige Parameter dargestellt: ein Öffnungsweg, ein Formposition-Istwert, ein Schließkraft-Istwert, eine hintere und eine vordere Auswerferposition sowie ein Auswerferposition-Istwert.

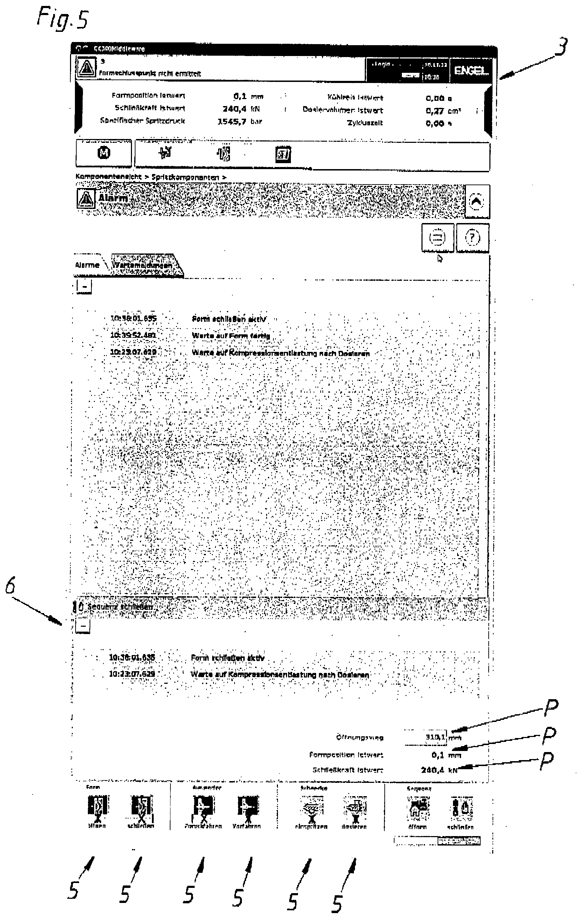

Ähnlich verhält es sich in Fig. 5, wobei hier eine Sequenz zum Schließen der Schließeinheit durchgeführt wird. Die dargestellten Parameter sind in diesem Fall ein Öffnungsweg, ein Formposition-Istwert sowie ein Schließkraft-Istwert.

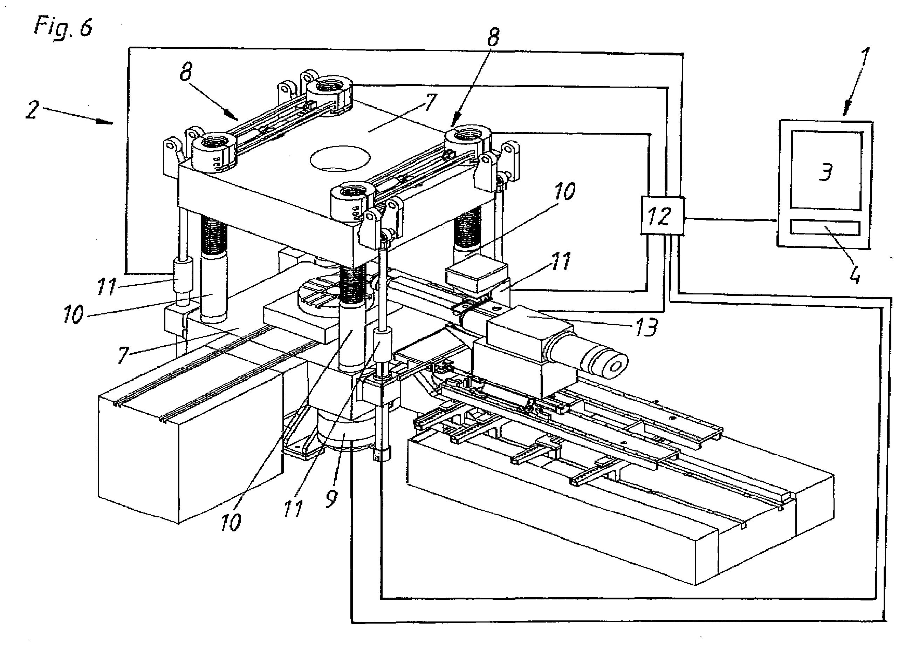

Fig. 6 zeigt eine Spritzgießmaschine 2 mit einer erfindungsgemäßen Bedieneinheit 1, welche über einen Bildschirm 3 sowie eine Datenverarbeitungseinrichtung 4 verfügt.

Hier ist eine Spritzgießmaschine mit einer vertikal schließenden Schließeinheit abgebildet, dies ist für die Erfindung an sich aber irrelevant. Die Spritzgießmaschine weist in diesem Fall Formaufspannplatten 7 und Holme 10 auf. Des Weiteren ist schematisch eine Steuer- oder Regeleinrichtung 12 dargestellt, welche mit den Verriegelungsmechanismen 8 den Eilgangvorrichtungen 11, den Druckaufbaumechanismen 9 sowie der Einspritzeinheit 13 verbunden ist.

Aufgrund der perspektivischen Darstellung der Spritzgießmaschine 2 können nicht alle vorhandenen Elemente mit Bezugszeichen versehen werden, obwohl diese Elemente natürlich trotzdem vorhanden sind.

Die Verbindung der Spritzgießmaschine mit der Bedieneinheit 1 erfolgt in diesem Fall über eine Verbindung zwischen der Steuer- oder Regeleinrichtung 12 und der Bedieneinheit 1. Es ist natürlich auch möglich, die Bedieneinheit direkt mit den Spritzgießmaschinenelementen zu verbinden bzw. die Steuer- oder Regeleinrichtung 12 mit der Datenverarbeitungseinrichtung 4 als eine einzige Vorrichtung auszuführen.

## Patentansprüche

1. Bedieneinheit für eine Spritzgießmaschine (2) mit einem Bildschirm (3), einer Datenverarbeitungseinrichtung (4) und wenigstens einer Handtaste (5) zur Bedienung von Spritzgießmaschinenelementen (8, 9, 11, 13), wobei zu Spritzgießmaschinenelementen (8, 9, 11, 13) gehörige, in der Spritzgießmaschine (2) vorliegende Informationen (P) von der Datenverarbeitungseinrichtung (4) abrufbar sind, wobei zu Spritzgießmaschinenelementen (8, 9, 11, 13) gehörige, in der Spritzgießmaschine (2) vorliegende Statusinformationen bezüglich einer Aktivierbarkeit oder einer Nicht-Aktivierbarkeit des zugehörigen Spritzgießmaschinenelements (8, 9, 11, 13) von der Datenverarbeitungseinrichtung (4) abrufbar sind, **dadurch gekennzeichnet, dass** bei Betätigung der wenigstens einen Handtaste, falls die zum entsprechenden Spritzgießmaschinenelement (8, 9, 11, 13) zugehörige Statusinformation Aktivierbarkeit anzeigt, wenigstens ein Bediensignal an das Spritzgießmaschinenelement (8, 9, 11, 13) versendbar ist sowie die zu den Spritzgießmaschinenelementen zugehörigen Informationen (P) auf dem Bildschirm (3) darstellbar sind und, falls die zum entsprechenden Spritzgießmaschinenelement (8, 9, 11, 13) zugehörige Statusinformation Nicht-Aktivierbarkeit anzeigt, die zu den Spritzgießmaschinenelementen zugehörigen Informationen (P) und ein auf die Nicht-Aktivierbarkeit hinweisender Warnhinweis auf dem Bildschirm (3) darstellbar sind, wobei die zu den Spritzgießmaschinenelementen zugehörigen Informationen Parameter (P) umfassen, die als Zahl und/oder in Balkendarstellung und/oder als Diagramm darstellbar sind.

2. Bedieneinheit nach Anspruch 1, **dadurch gekennzeichnet, dass** der Bildschirm (3) berührungsempfindlich ist und vorzugsweise die wenigstens eine Handtaste (5) als berührungsempfindlicher Bereich auf dem berührungsempfindlichen Bildschirm (3) ausgebildet ist.

3. Bedieneinheit nach Anspruch 1 oder 2, **dadurch gekennzeichnet, dass** die zu den Spritzgießmaschinenelementen zugehörigen Informationen und/oder der Warnhinweis in einem an die Handtasten (5) unmittelbar angrenzenden Darstellungsbereich (6) darstellbar sind, wobei der Darstellungsbereich (6) vorzugsweise oberhalb der wenigstens einen Handtaste (5) anordenbar ist.

4. Spritzgießmaschine mit einer Bedieneinheit (1) nach wenigstens einem der Ansprüche 1 bis 3.

## Claims

1. An operating unit for an injection molding machine (2) having a display screen (3), a data processing device (4) and at least one hand button (5) for the operation of injection molding machine elements (8, 9, 11, 13), wherein items of information which are associated with injection molding elements (8, 9, 11, 13) and which are present in the injection molding machine (2) can be called up by the data processing device (4), wherein items of status information which are associated with injection molding elements (8, 9, 11, 13) and which are present in the injection molding machine (2) in respect of activatability or non-activatability of the associated injection molding machine element (8, 9, 11, 13) can be called up by the data processing device (4), **characterised in that** upon actuation of the at least one hand button, if the status information associated with the corresponding injection molding machine element (8, 9, 11, 13) indicates activatability, at least one operating signal can be sent to the injection molding machine (8, 9, 11, 13) and the associated items of information can be represented on the display screen (3) and, if the status information associated with the corresponding injection molding machine element (8, 9, 11, 13) indicates non-activatability, the associated items of information and a warning indication indicating non-activatability can be represented on the display screen (3), wherein the items of information associated with injection molding elements include parameters (P) which can be represented as a digit and/or in a bar form of representation and/or in the form of a diagram.

2. An operating unit as set forth in claim 1 **characterised in that** the display screen (3) is touch-sensitive and preferably the at least one hand button (5) is in the form of a touch-sensitive region on the touch-sensitive display screen (3).

3. An operating unit as set forth in claim 1 or claim 2 **characterised in that** the items of information and/or the warning indication can be represented in a representation region (6) directly adjoining the hand buttons (5), wherein the representation region (6) can preferably be arranged above the at least one hand button (5).

4. An injection molding machine having an operating unit (1) as set forth in at least one of claims 1 through 3.

## Revendications

1. Unité de commande pour une machine de moulage par injection (2) avec un écran (3), un dispositif de traitement de données (4) et au moins une touche manuelle (5) pour la commande d'éléments de machine de moulage par injection (8, 9, 11, 13), dans laquelle des informations (P) présentes dans la machine de moulage par injection (2), associées aux éléments de machine de moulage par injection (8, 9, 11, 13), peuvent être consultées par le dispositif de traitement de données (4), dans laquelle des informations de statut présentes dans la machine de moulage par injection (2), associées aux éléments de machine de moulage par injection (8, 9, 11, 13), concernant une possibilité d'activation ou une impossibilité d'activation de l'élément de machine de moulage par injection (8, 9, 11, 13) associé, peuvent être consultées par le dispositif de traitement de données (4), **caractérisée en ce que**, lors de l'actionnement de l'au moins une touche manuelle, au cas où l'information de statut associée à l'élément de machine de moulage par injection (8, 9, 11, 13) correspondant afficherait une possibilité d'activation, au moins un signal de commande peut être envoyé à l'élément de machine de moulage par injection (8, 9, 11, 13) et les informations (P) associées aux éléments de machine de moulage par injection peuvent être représentées sur l'écran (3) et, au cas où l'information de statut associée à l'élément de machine de moulage par injection (8, 9, 11, 13) correspondant afficherait une impossibilité d'activation, les informations (P) associées aux éléments de machine de moulage par injection et un avertissement indiquant l'impossibilité d'activation peuvent être représentés sur l'écran (3), dans laquelle les informations associées aux éléments de machine de moulage par injection comprennent des paramètres (P), qui peuvent être représentés en tant que nombre et/ou histogramme et/ou en tant que diagramme.

2. Unité de commande selon la revendication 1, **caractérisée en ce que** l'écran (3) est tactile et de préférence l'au moins une touche manuelle (5) est réalisée sous la forme d'une zone tactile sur l'écran tactile (3).

3. Unité de commande selon la revendication 1 ou 2, **caractérisée en ce que** les informations associées aux éléments de machine de moulage par injection et/ou l'avertissement peuvent être représentés dans une zone de représentation (6) directement adjacente aux touches manuelles (5), dans laquelle la zone de représentation (6) peut être disposée de préférence au-dessus de l'au moins une touche manuelle (5).

4. Machine de moulage par injection avec une unité de commande (1) selon l'une quelconque des revendications 1 à 3.
